# EUROPÄISCHE PATENTSCHRIFT

(11) **EP 1 888 371 B1**
(45) Veröffentlichungstag und Bekanntmachung des Hinweises auf die Patenterteilung: **11.07.2012**
(21) Anmeldenummer: 06763161.4
(22) Anmeldetag: 17.05.2006
(51) Int. Cl.: H01L 27/32, B60Q 3/02, B60R 1/12, B60J 3/02

(54) **FAHRZEUGSPIEGEL MIT EINEM OLED-LEUCHTMITTEL**
VEHICLE MIRROR COMPRISING AN OLED ILLUMINATION ELEMENT
MIROIR DE VEHICULE COMPORTANT UN ELEMENT LUMINESCENT A OLED

(30) Priorität: 27.05.2005 DE 102005024837
(43) Veröffentlichungstag der Anmeldung: 20.02.2008
(73) Patentinhaber: Johnson Controls Interiors GmbH & Co. KG, 47929 Grefrath (DE)
(72) Erfinder: MÜLLER, Wolfgang, 42929 Wermelskirchen (DE); HILBERT, Bernard, F-57450 Cappel (FR)
(74) Vertreter: Wolff, Felix
(86) Internationale Anmeldenummer: PCT/EP2006/062358
(87) Internationale Veröffentlichungsnummer: WO 2006/125737

(56) Entgegenhaltungen:
- WO-A-03/055708
- FR-A- 2 830 314
- US-A1- 2004 097 005
- US-A1- 2004 196 661
- US-B1- 6 499 868

## Beschreibung

Die vorliegende Erfindung betrifft einen Spiegel in einem Kraftfahrzeug, insbesondere einen Schminkspiegel an dessen Umfang abstandslos mindestens eine vorzugsweise spiegelnde OLED angeordnet ist.

Spiegel sind aus dem Stand der Technik hinlänglich bekannt und werden heutzutage mit zusätzlichen Merkmalen ausgestattet. Beispielsweise ist aus der DE 101 40 689 A1 ein Fahrzeugspiegel mit einer Spiegelscheibe und einem organisch lichtemittierenden aus zwei Substraten und einer OLED-Schicht gebildeten Display bekannt, wobei die Spiegelscheibe sogleich eines der Substrate des OLED-Displays bildet. Bei diesem Spiegel ist es möglich, Informationen in die spiegelnde Fläche zu projizieren. Ein weiterer Rückspiegel mit einer Anzeigeeinheit ist aus der DE 103 25 845 A1 bekannt. Weiterhin ist aus dem Stand der Technik bekannt, dass Spiegel Beleuchtungen aufweisen. Die Beleuchtung dieser Spiegel beruhen gemäß dem Stand der Technik auf einer Konstruktion aus Gehäuse, Glühbirne, Birnenfassung, Verdrahtung, Reflektor und Streuscheibe. Diese Konstruktionen weisen eine Höhe von mehreren Millimetern auf. Darüber hinaus muss die Streuscheibe abnehmbar gestaltet sein, um ein Auswechseln einer defekten Glühbirne zu ermöglichen. Diese Nachteile schränken die Einsatzmöglichkeiten derartiger Beleuchtungen als Fahrzeugspiegelbeleuchtung, insbesondere als Make-up-Spiegelbeleuchtung, ein.

WO 03/055708A1 und FR 2830 314 beschreiben beide Make-up-spiegeln wobei ein Teil des Umfangs von LED'S beleuchtet wird.

Der vorliegenden Erfindung lag deshalb die Aufgabe zugrunde, einen Spiegel zur Verfügung zu stellen, der die Nachteile des Standes der Technik nicht aufweist.

Gelöst wird die Aufgabe mit einem Spiegel in einem Kraftfahrzeug, insbesondere einem Schminkspiegel, an dessen Umfang abstandslos mindestens eine, vorzugsweise spiegelnde, OLED angeordnet ist.

Es war für den Fachmann überaus erstaunlich und nicht zu erwarten, dass der erfindungsgemäße Spiegel sehr gut ausgeleuchtet ist. Die OLEDs am Umfang des Spiegels sind so flach ausgeführt, dass die OLEDs und der Spiegel in einem Rahmen angeordnet werden können. Darüber hinaus blendet das OLED-Licht den Betrachter nicht. Durch die ausgesprochen hohe Lebensdauer der OLED kann auf deren reversiblen Einbau verzichtet werden.

Ein Spiegel im Sinne der Erfindung ist jede spiegelnde Fläche, die auftreffendes Licht zu einem möglichst hohem Anteil, vorzugsweise 100%, reflektiert. Erfindungsgemäß ist am Umfang dieses Spiegels mindestens eine OLED angeordnet. Das OLED ist somit nicht teil dieser spiegelnden Fläche sondern umrandet die spiegelnde Fläche zumindest teilweise.

Erfindungsgemäß weist die erfindungsgemäße Beleuchtungseinheit eine OLED (Organic Light Emitting Diode) auf. Bei OLEDs handelt es sich um ein elektronisches Bauteil, das in der Regel mehrere dünne organische stromleitende Schichten aufweist. Die OLEDs haben eine Dicke von weniger 3 mm, vorzugsweise weniger als 1,4 mm und besonders bevorzugt < 1 mm. Vorzugsweise weisen die OLEDs im nicht angesteuerten Zustand eine Transmission von > 70%, besonders bevorzugt > 75% auf. OLEDs verfügen in der Regel eine Trägerschicht, beispielsweise Glas, auf, auf die eine leuchtfähige Beschichtung aufgebracht wird und eine Deckschicht, beispielsweise ebenfalls Glas auf. Die Trägerschicht weist vorzugsweise eine reflektierende Schicht auf, die das von den Dioden emittierte Licht reflektiert und die im nicht angesteuerten Zustand der Dioden als Spiegel wirkt. Die OLEDs emittieren ein helles, diffuses Licht, das nicht blendet. OLEDs zeichnen sich durch eine sehr schnelle Ansprechgeschwindigkeit aus. Durch Vorsatz eines Filters kann eine weiß leuchtende OLED in jeder beliebigen Farbe leuchten. Dies ist beispielsweise für Leselicht vorteilhaft. Eine Farbwirkung der OLEDs kann jedoch auch ohne Filter erzielt werden. Des weiteren sind sie sehr leicht und verfügen über eine ausgesprochen hohe Haltbarkeit, so dass beispielsweise das Gewicht eines Fahrzeuges und die Auswechselungsintervalle der Beleuchtungseinheit vermindert werden können. In der Regel kann aufgrund der langen Lebensdauer eine Auswechslung völlig entfallen. Durch das vergleichsweise geringe Gewicht der OLEDs können auch vergleichsweise großflächige Beleuchtungen realisiert werden.

Vorzugsweise handelt es sich bei der OLED um eine spiegelnde OLED. Diese Ausführungsformen der vorliegenden Erfindung hat den Vorteil, dass die spiegelnde OLED im nicht angesteuerten Zustand wie ein Spiegel aussieht. Dadurch entsteht im Zusammenhang mit dem Spiegel eine Fläche mit einem homogenen spiegelnden Erscheinungsbild.

Vorzugsweise weist der Spiegel mindestens an einem Teil seines Umfangs eine OLED auf. Weiterhin bevorzugt weist der Spiegel an zwei gegenüberliegenden Teilen seines Umfangs jeweils ein OLED auf. Vorzugsweise sind der Spiegel und das OLED in einer Ebene angeordnet, wobei insbesondere die dem Benutzer zugewandte Fläche in einer Ebene liegt.

In einer weiteren bevorzugten Ausführungsform ist die OLED gekrümmt angeordnet. Weiterhin bevorzugt oder besonders bevorzugt ist die OLED abgewinkelt zum Spiegel angeordnet. Diese Ausführungsform hat insbesondere den Vorteil, dass Licht, das von der OLED emittiert wird, den Betrachter nicht blendet und dass die OLED im abgeschalteten Zustand dem Betrachter eine dreidimensionale Betrachtung ermöglicht.

Vorzugsweise sind der Spiegel und die OLED in einer Spiegelkassette angeordnet. Diese Ausführungsform der vorliegenden Erfindung ermöglicht insbesondere eine sehr einfache Montage. Für den Fall, dass der Spiegel keine Beleuchtung aufweisen soll, kann bei dieser bevorzugten Ausführungsform der vorliegenden Erfindung ohne Änderung des Rahmens ein größerer Spiegel verwendet werden, was die Ausstattungsvielfalt, beispielsweise bei der Kfz-Montage, reduziert.

Der erfindungsgemäße Spiegel eignet sich insbesondere zur Anordnung an Fahrzeuginnenausstattungsteilen. Ein weiterer Gegenstand der vorliegenden Erfindung ist deshalb ein Fahrzeuginnenausstattungsteil aufweisend den erfindungsgemäßen Spiegel.

Vorzugsweise handelt es sich bei dem Fahrzeuginnenausstattungsteil um eine Sonnenblende oder eine Kopfstütze, in der jeweils der erfindungsgemäße Spiegel angeordnet ist.

Im folgenden wird die Erfindung anhand der Figuren 1 bis 3 erläutert. Diese Erläuterungen sind lediglich beispielhaft und schränken den allgemeinen Erfindungsgedanken nicht ein. Die Erläuterungen gelten für beide Erfindungsgegenstände gleichermaßen.
- **Figur 1**: zeigt den erfindungsgemäßen Spiegel in Draufsicht,
- **Figur 2**: zeigt den erfindungsgemäßen Spiegel gemäß **Figur 1** in einer Seitenansicht und
- **Figur 3**: zeigt eine weitere Ausführungsform des Spiegels gemäß **Figur 1**.

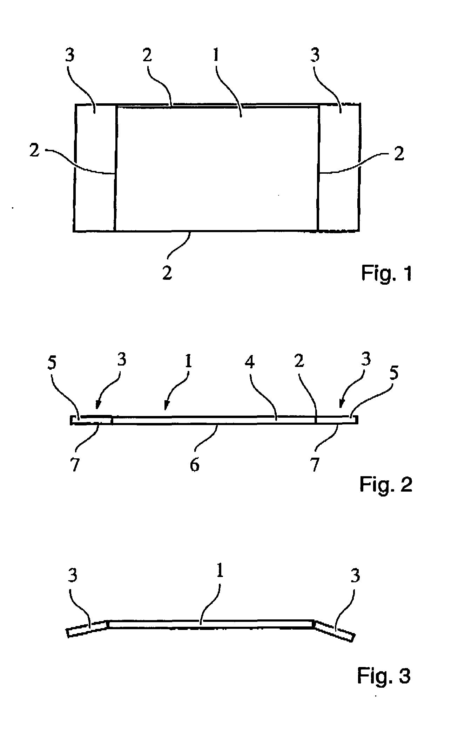

In **Figur 1** ist der erfindungsgemäße Spiegel 1 dargestellt. In dem vorliegenden Fall ist der Spiegel 1 rechteckig gestaltet und weist an der rechten und der linken Fläche seines Umfangs 2 jeweils eine OLED 3 auf. Bei der OLED handelt es sich um eine reflektierende OLED, das im nicht angesteuerten Zustand wie ein Spiegel wirkt, so dass die Flächen 1 und 3 im nicht angesteuerten Zustand der OLEDs wie eine große, im wesentlichen homogene Spiegelfläche wirken. Im angesteuerten Zustand fungieren die reflektierenden OLED 3 als Leuchten und beleuchten im Falle eines Schminkspiegels, beispielsweise das Gesicht des Betrachters.

In **Figur 2** ist eine Seitenansicht des Spiegels gemäß **Figur 1** dargestellt. In dieser Ansicht ist erkennbar, dass der Spiegel 1 aus einem Substrat 4, in dem vorliegenden Fall ein Glassubstrat, besteht, das ein seiner Rückseite eine spiegelnde Fläche 6 aufweist. Die OLEDs 3 sind mit dem Bezugszeichen 5 gekennzeichnet und weisen an ihrer Rückseite eine spiegelnde Fläche 7 auf. Das OLED 3 besteht aus einer Abdeckscheibe, einem Substrat sowie einer OLED-Schicht mit Elektroden, die gemeinsam mit dem Bezugszeichen 5 gekennzeichnet sind. Die reflektierenden Schichten 6, 7 reflektieren auftreffendes Licht 100%ig. Im nicht angesteuerten Zustand wirken die Flächen 1, 3 als eine zusammenhängende Spiegelfläche.

In **Figur 3** ist eine weitere Ausführungsform des Spiegels gemäß **Figur 1 und 2** dargestellt. Im wesentlichen entspricht der Spiegel gemäß Figur 3 dem Spiegel gemäß den Figuren 1 und 2, wobei in dem vorliegenden Fall die OLEDs 3 winklig zu dem Spiegel 1 angeordnet sind. Diese Ausführungsform der vorliegenden Erfindung hat den Vorteil, dass der Betrachter des Spiegels besser ausgeleuchtet wird, dass er von dem Licht der OLEDs weniger geblendet wird und dass die OLEDs im abgeschalteten Zustand ein dreidimensionales Spiegelbild erzeugen. Der Fachmann erkennt, dass auch mehrere OLEDS nebeneinander angeordnet sein können, die, bezogen auf die Papierebene einen unterschiedlichen Winkel und/oder eine unterschiedliche Krümmung aufweisen können.

### Bezugszeichenliste

- 1: Spiegel
- 2: Umfang
- 3: OLED
- 4: Substrat, Glas
- 5: OLED
- 6, 7: reflektierende Flächen

## Patentansprüche

1. Spiegel (1) in einem Kraftfahrzeug, insbesondere einen Schminkspiegel, **dadurch gekennzeichnet**, das an seinem Umfang (2) abstandslos mindestens eine spiegelnde OLED (3) angeordnet ist.

2. Spiegel nach Anspruch 1, **dadurch gekennzeichnet, dass** er viereckig ist und dass an mindestens einem Teil seines Umfangs eine OLED (3) angeordnet ist.

3. Spiegel nach Anspruch 2, **dadurch gekennzeichnet, dass** an zwei gegenüberliegenden Teilen seines Umfangs jeweils eine OLED (3) angeordnet ist.

4. Spiegel nach einem der voranstehenden Ansprüche, **dadurch gekennzeichnet, dass** der Spiegel und die OLED (3) in einer Ebene angeordnet sind.

5. Spiegel nach einem der Ansprüche 1 - 3, **dadurch gekennzeichnet, dass** die OLED (3) gekrümmt ist.

6. Spiegel nach einem der Ansprüche 1 - 3 oder 5, **dadurch gekennzeichnet, dass** die OLED (3) abgewinkelt zu dem Spiegel angeordnet ist.

7. Spiegel nach einem der voranstehenden Ansprüche, **dadurch gekennzeichnet, dass** der Spiegel und die OLED (3) in einer Spiegelkassette angeordnet sind.

8. Fahrzeuginnenausstattungsteil aufweisend einen Spiegel nach einem der voranstehenden Ansprüche.

9. Fahrzeuginnenausstattungsteil nach Anspruch 8, **dadurch gekennzeichnet, dass** es eine Sonnenblende oder eine Kopfstütze ist.

## Claims

1. Mirror (1) in a motor vehicle, in particular a vanity mirror, **characterized in that** at least one reflective OLED (3) is arranged at the periphery (2) of said mirror without any spacing.

2. Mirror according to Claim 1, **characterized in that** it is quadrangular, and **in that** an OLED (3) is arranged at at least one part of the periphery of said mirror.

3. Mirror according to Claim 2, **characterized in that** a respective OLED (3) is arranged at two opposite parts of the periphery of said mirror.

4. Mirror according to one of the preceding claims, **characterized in that** the mirror and the OLED (3) are arranged in one plane.

5. Mirror according to one of Claims 1-3, **characterized in that** the OLED (3) is curved.

6. Mirror according to one of Claims 1-3 or 5, **characterized in that** the OLED (3) is arranged in a manner angled with respect to the mirror.

7. Mirror according to one of the preceding claims, **characterized in that** the mirror and the OLED (3) are arranged in a mirror cassette.

8. Vehicle interior trim part having a mirror according to one of the preceding claims.

9. Vehicle interior trim part according to Claim 8, **characterized in that** it is a sun visor or a headrest.

## Revendications

1. Miroir (1) pour véhicule automobile, en particulier miroir de courtoisie, **caractérisé en ce qu'**au moins une OLED réfléchissante (3) est disposée sans écartement à sa périphérie (2).

2. Miroir selon la revendication 1, **caractérisé en ce qu'**il est rectangulaire et **en ce qu'**une OLED (3) est disposée sur au moins une partie de sa périphérie.

3. Miroir selon la revendication 2, **caractérisé en ce qu'**une OLED (3) est disposée dans deux parties opposées de sa périphérie.

4. Miroir selon l'une des revendications précédentes, **caractérisé en ce que** le miroir et l'OLED (3) sont disposés dans un même plan.

5. Miroir selon l'une des revendications 1 à 3, **caractérisé en ce que** l'OLED (3) est incurvée.

6. Miroir selon l'une des revendications 1 à 3 ou 5, **caractérisé en ce que** l'OLED (3) est disposée obliquement par rapport au miroir.

7. Miroir selon l'une des revendications précédentes, **caractérisé en ce que** le miroir et l'OLED (3) sont disposés dans une cassette à miroir.

8. Pièce d'équipement d'habitacle de véhicule présentant un miroir selon l'une des revendications précédentes.

9. Pièce d'équipement d'habitacle de véhicule selon la revendication 8, **caractérisé en ce qu'**elle est un pare-soleil ou un appuie-tête.
